# EUROPÄISCHE PATENTSCHRIFT

(11) **EP 1 818 593 B1**
(45) Veröffentlichungstag und Bekanntmachung des Hinweises auf die Patenterteilung: **20.05.2009**
(21) Anmeldenummer: 07002576.2
(22) Anmeldetag: 07.02.2007
(51) Int. Cl.: F16L 37/14, F24H 9/12

(54) **Aufnahmekörper in Verbindung mit einer Rohrleitung**
Fastening part in connection with a pipeline
Corps de réception en relation avec une conduite

(30) Priorität: 13.02.2006 AT 2192006
(43) Veröffentlichungstag der Anmeldung: 15.08.2007
(73) Patentinhaber: Vaillant GmbH, 42859 Remscheid (DE)
(72) Erfinder: Migliorino, Giuseppe, 42855 Remscheid (DE); Peters, Bernard, 50259 Pulheim (DE); Schürmann, Bernd, 40489 Düsseldorf (DE)
(74) Vertreter: Hocker, Thomas

(56) Entgegenhaltungen:
- EP-A- 1 209 406
- EP-A- 1 528 329
- EP-A1- 1 544 531
- EP-A2- 0 532 242
- AT-B- 397 136
- DE-A1- 2 143 714
- DE-U1- 9 303 815
- US-A- 4 526 411
- US-A- 4 750 765

## Beschreibung

Die Erfindung bezieht sich auf einen Aufnahmekörper in Verbindung mit einer Rohrleitung zur dichten Verbindung mit einem Gegenstück nach dem Oberbegriff von Anspruch 1. Ein derartiger Aufnahmekörper ist beispielweise aus der DE 21 43 714 A1 bekannt.

In der Heizungstechnik bestehen hohe Anforderungen bezüglich der Reinheit des Brauchwasserkreislaufs. So darf das Brauchwasser mit bestimmten Materialien nicht in Verbindung kommen. Verbindungsstellen sind daher dementsprechend zu gestalten, dass ein Kontakt mit bestimmten Werkstoffen ausgeschlossen ist.

Bei Heizungsanlagen besteht ferner die Anforderung, dass einzelne Komponenten leicht montier- und demontierbar sind und hierbei eine Beschädigung von Dichtungen ausgeschlossen ist. Beim Anschluss eines Sekundärwärmetauschers an Brauchwasserleitungen wird gemäß dem Stand der Technik eine Rohrleitung mit Flansch über eine Flachdichtung mit dem Sekundärwärmetauscher verbunden und anschließend auf der dem Sekundärwärmetauscher abgewandten Seite der Flansch durch einen Sicherungsring gehalten. Dies setzt eine sehr genaue Positionierung voraus.

DE 21 43 714 A1 zeigt ein Rohr mit einem anliegenden Flansch, wobei das Rohr mit dem Flansch über eine Verzahnung verbunden ist. Eine derartige Verbindung gewährleistet keine Dichtheit. Bei der Verbindung wird das Rohrende plastisch verformt, was einen hohen Kraftaufwand bedingt.

Die aus US-A-4 526 411 und EP 0 532 242 A2 bekannten Rohrleitungen besitzen im Rohrverlauf jeweils einen Flansch, der auf eine Dichtung drückt und somit einen festen Sitz verursacht.

Den Verbindungen aus dem Stand der Technik ist gemein, dass vor dem Befestigen des Sicherungselements das Rohr exakt in der Rohraufnahme positioniert sein muss.

Der Erfindung liegt die Aufgabe zugrunde, einerseits eine einfache Montage zu ermöglichen und andererseits den Kontakt des Brauchwassers zu Materialien außerhalb des Brauchwasserkreislaufs zu verhindern.

Erfindungsgemäß wird dies gemäß den Merkmalen des Anspruchs 1 dadurch erreicht, dass eine Rohrleitung mit Flansch durch einen Aufnahmering an einem Aufnahmekörper gehalten wird, wobei der Ring über eine radiale Nut verfügt. Die radiale Nut des Ringes verfügt über schräge Flanken. Hierdurch ist es möglich, dass bei der Montage der Ring beim Einschieben des Sicherungsrings in Richtung Flansch gedrückt wird und eine große Anpresskraft erzeugt. Somit muss der Ring zu Beginn des Montagevorgangs noch nicht in seiner endgültigen Position angeordnet sein.

Gemäß den Merkmalen des abhängigen Anspruchs 2 ist die Höhe der Dichtung derartig groß, dass sie bei der Verbindung des Rohres mit dem Gegenstück zusammengepresst wird.

Gemäß den Merkmalen des abhängigen Anspruchs 3 ist die Dichtung ein konkaver Stützring, was den Vorteil hat, dass der Druck des Brauchwassers die Dichtung nach außen drückt und somit die Dichtwirkung unterstützt.

Die Erfindung wird nun anhand der Figuren detailliert erläutert.

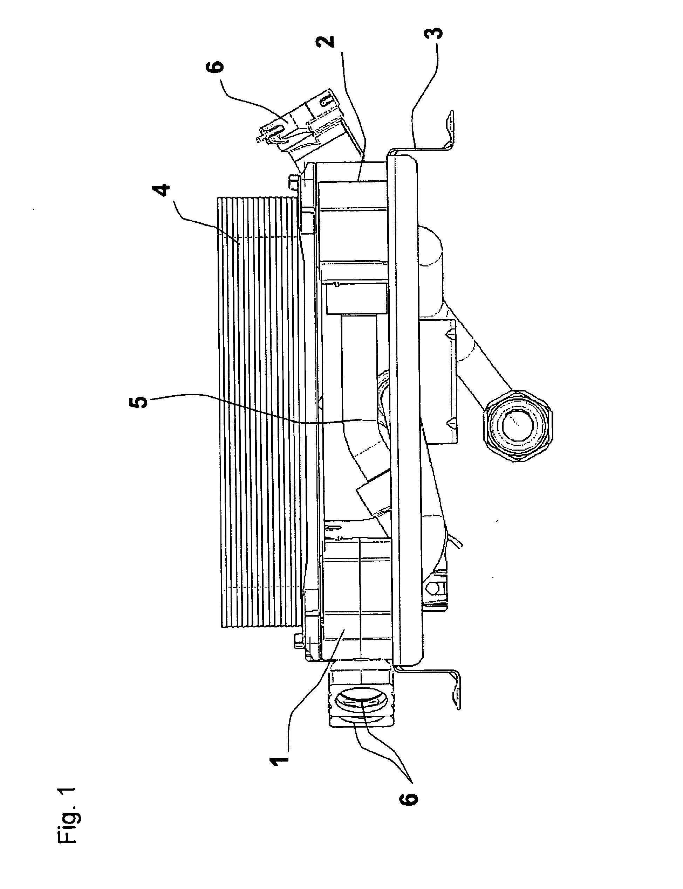

Figur 1 zeigt ein Halteblech 3, auf dem zwei Aufnahmekörper 1, 2 befestigt sind. In den Aufnahmekörpern 1, 2 befinden sich Rohrleitungen 9. Die Rohrleitungen 9 münden in den Aufnahmekörpern 1, 2, in einen Sekundärwärmetauscher 4, welcher mit den Aufnahmekörpern 1, 2 verschraubt ist. An den dem Primärwärmetauscher abgewandten Enden der Rohrleitungen 9 befinden sich Anschlüsse 6.

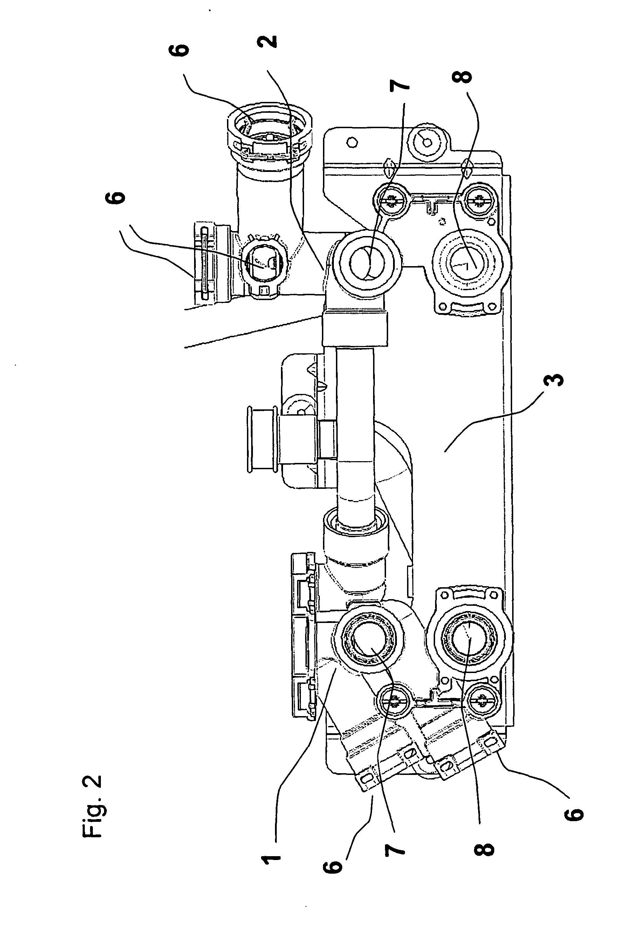

Figur 2 zeigt eine um 90° gedrehte Draufsicht auf die Vorrichtung, welche in Figur 1 gezeigt ist, jedoch ohne den Sekundärwärmetauscher 4. In den Aufnahmekörpern 1, 2 befinden sich Durchlässe 7 für den Brauchwasseranschluss sowie Durchlässe 8 für den Heizungswasseranschluss.

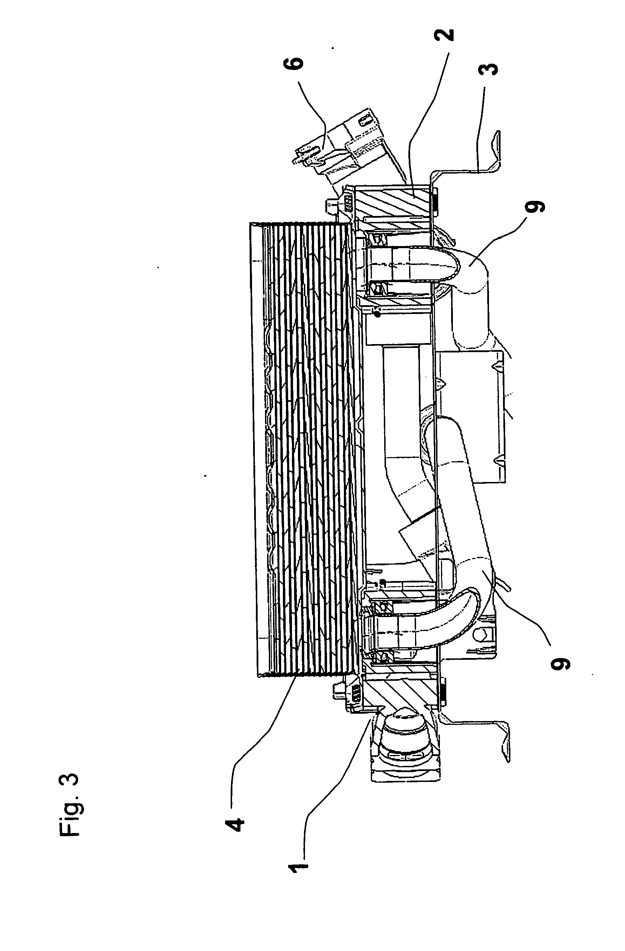

Figur 3 zeigt einen Schnitt durch die Vorrichtung gemäß Figur 1.

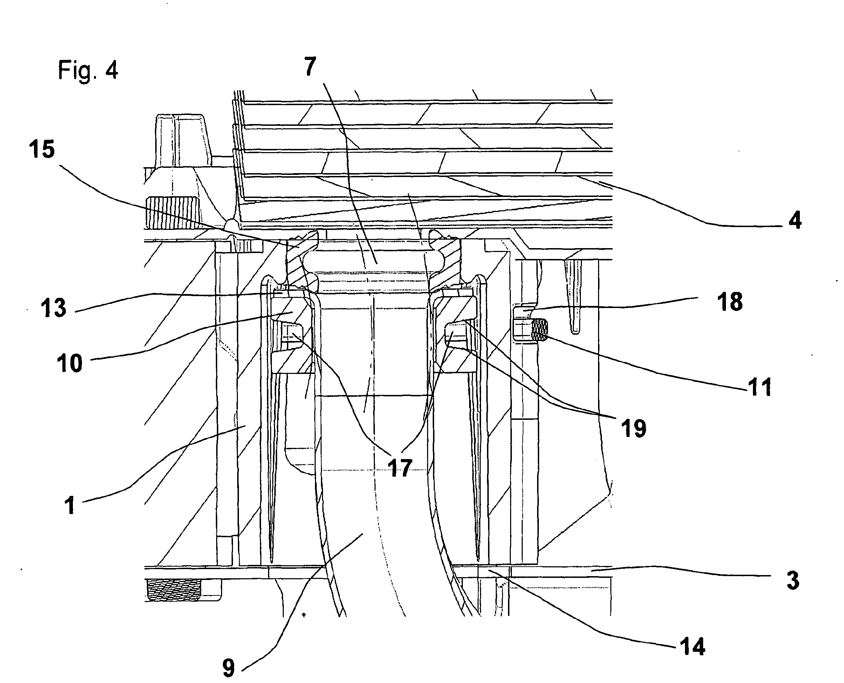

Figur 4 zeigt einen Ausschnitt hieraus. Das Rohr 9 mit dem Flansch 13 am Rohrende liegt an dem Aufnahmekörper 1 derart an, dass der Durchlass 7 nicht verdeckt ist. Auf der anderen Seite des Flansches befindet sich ein Ring 10 mit einer radialen Nut 17, welcher über schräge Flanken 19 verfügt. Ein Sicherungsring 11, welcher durch eine Öffnung 18 der Aufnahmevorrichtung 1 geschoben ist, greift in die Nut 17 ein und drückt somit den Flansch 13 nach oben an die Anschlagfläche des Aufnahmekörpers 1. In dem Durchlass 7 innerhalb des Aufnahmekörpers 1 befindet sich eine Dichtung 15, welche zum Inneren eine konkave Form aufweist und deren Höhe von außen nach innen zunimmt. Oberhalb der Dichtung 15 befindet sich der Primärwärmetauscher, welcher mit dem Aufnahmekörper verschraubt ist.

Bei der Montage kann der Ring 10 etwas tiefer als dargestellt zunächst angeordnet sein, da der Sicherungsring 11 über die schrägen Flanken 19 zu einer Axialverschiebung des Rings nach oben führt.

Dichtungen wie dargestellt werden auch unter der Bezeichnung Seal vertrieben.

Die dargestellte Verbindung ist einfach zu montieren und demontieren, vermeidet sicher eine Verbindung im Aufnahmekörper und garantiert eine materialschonende Belastung der Dichtung.

## Patentansprüche

1. Aufnahmekörper (1, 2) in Verbindung mit einer Rohrleitung (9) mit einem Flansch (13) am Rohrende, mit einer Dichtung (15) zur dichtenden Verbindung mit einem Gegenstück, wobei der Flansch (13) auf der der Rohrleitung (9) abgewandten Seite an dem Aufnahmekörper (1, 2) anliegt, der Aufnahmekörper (1, 2) innerhalb des von dem Flansch (13) abgedeckten Bereichs über einen Durchlass (7) verfügt, innerhalb dieses Durchlasses (7) die Dichtung (15) auf dem Flansch (13) angeordnet ist, auf der der Rohrleitung zugewandten Seite des Flansches (13) ein Ring (10) mit radialer Nut (17) angeordnet ist und von einem Sicherungsring (11), welcher durch Öffnungen (18) im Aufnahmekörper (1, 2) geführt wird, gesichert ist, **dadurch gekennzeichnet, dass** die Rohrleitung (9) und der Flansch (13) eine einteilige Einheit bilden und die radiale Nut (17) des Rings (10) in axialer Richtung der Rohrleitung (9) beidseitig über schräge Flanken (19) verfügt.

2. Aufnahmekörper (1, 2) in Verbindung mit einer Rohrleitung (9) nach Anspruch 1, **dadurch gekennzeichnet, dass** die Dichtung (15) über eine Höhe, die größer ist als die Materialdicke des Aufnahmekörpers (1, 2) um den Durchlass (7), verfügt.

3. Aufnahmekörper (1, 2) in Verbindung mit einer Rohrleitung (9) nach Anspruch 1 oder 2, **dadurch gekennzeichnet, dass** die Dichtung (15) ein konkaver Stützring, vorzugsweise mit Erweitung der Höhe der Dichtung (15) in Richtung des Durchlasses (7) ist.

## Claims

1. A connector body (1, 2) connected with a tube (9) comprising a flange (13) at end of such tube, with a seal (15) for a sealed connection with a counterpart, such flange (13) abutting the connector body (1, 2) on the side away from the tube (9), with the connector body (1, 2) comprising an outlet (7) within the area covered by the flange (13), with the said seal (15) being arranged on the flange (13) within the area of the said outlet (7), with a ring (10) having a radial groove (17) being arranged on the side of the flange (13) facing the said tube and being secured by a locking ring (11) guided through openings (18) in the connector body (1, 2), **characterised in that** the tube (9) and the flange (13) form an integral unit and that the radial groove (17) of the ring (10) is on both sides provided with angular flanks (19) in an axial direction of the tube (9).

2. A connector body (1, 2) in connection with a tube (9) as claimed in Claim 1, **characterised in that** the seal (15) has a height that is greater than the thickness of the material of the connector body (1, 2) around the outlet (7).

3. A connector body (1, 2) in connection with a tube (9) as claimed in Claim 1, **characterised in that** the seal (15) is a concave back up ring, preferably with an extension of the height of the seal (15) in the direction of the outlet (7).

## Revendications

1. Corps de réception (1, 2) en relation avec une conduite (9) pourvue d'une bride (13) à son extrémité, avec un joint d'étanchéité (15) pour l'assemblage étanche avec un pendant, sachant que la bride (13) s'applique contre le corps de réception (1, 2) sur le côté opposé à la conduite (9), que le corps de réception (1, 2) dispose d'un passage (7) à l'intérieur de la région recouverte par la bride (13), que le joint d'étanchéité (15) est disposé sur la bride (13) à l'intérieur de ce passage (7), et qu'une bague (10) pourvue d'une rainure radiale (17) est disposée sur le côté de la bride (13) qui est tourné vers la conduite et est assujettie par un jonc d'arrêt (11) qui est dirigé par des ouvertures (18) dans le corps de réception (1, 2), **caractérisé en ce que** la conduite (9) et la bride (13) forment une unité d'un seul tenant, et la rainure radiale (17) de la bague (10) dispose de flancs obliques (19) de part et d'autre dans la direction axiale de la conduite (9).

2. Corps de réception (1, 2) en relation avec une conduite (9) selon la revendication 1, **caractérisé en ce que** le joint d'étanchéité (15) est d'une hauteur qui est supérieure à l'épaisseur du matériau du corps de réception (1, 2) autour du passage (7).

3. Corps de réception (1, 2) en relation avec une conduite (9) selon la revendication 1 ou 2, **caractérisé en ce que** le joint d'étanchéité (15) est une bague d'appui concave, de préférence avec agrandissement de la hauteur du joint d'étanchéité (15) en direction du passage (7).
